# FASCICULE DE BREVET EUROPEEN

(11) **EP 3 975 742 B1**
(45) Date de publication et mention de la délivrance du brevet: **23.09.2026**
(21) Numéro de dépôt: 20747449.5
(22) Date de dépôt: 29.05.2020
(51) Int. Cl.: A23J 3/14, A23J 3/16, A23L 33/185

(54) **PROTEINE DE LEGUMINEUSE CO-ATOMISEE A FLAVEUR REDUITE**
CO-ATOMISIERTES HÜLSENFRUCHTPROTEIN MIT REDUZIERTEM GESCHMACK
CO-ATOMISED LEGUME PROTEIN WITH REDUCED FLAVOUR

(30) Priorité: 29.05.2019 FR 1905754
(43) Date de publication de la demande: 06.04.2022
(73) Titulaire: Firmenich SA, 1242 Satigny (CH)
(72) Inventeur: CAULIER, Bernard, 59273 Fretin (FR); LAROCHE, Christophe, 35300 Fougeres (FR); IBERT, Mathias, 59930 La Chapelle d'Armentieres (FR)
(74) Mandataire: Strych, Sebastian
(86) Numéro de dépôt international: PCT/FR2020/050925
(87) Numéro de publication internationale: WO 2020/240144

(56) Documents cités:
- WO-A1-03/082026
- WO-A1-2019/048564
- WO-A1-2019/048804
- WO-A1-2019/053387
- FR-A1- 2 942 585
- JIANG ZHONG-QING ET AL: "Faba bean flavour and technological property improvement by thermal pre-treatments", LWT- FOOD SCIENCE AND TECHNOLOGY, ACADEMIC PRESS, UNITED KINGDOM, vol. 68, 12 December 2015 (2015-12-12), pages 295 - 305, XP029404889, ISSN: 0023-6438, DOI: 10.1016/J.LWT.2015.12.015
- YANG LAN ET AL: "Solid dispersion-based spray-drying improves solubility and mitigates beany flavour of pea protein isolate", FOOD CHEMISTRY, vol. 278, 1 April 2019 (2019-04-01), NL, pages 665 - 673, XP055643181, ISSN: 0308-8146, DOI: 10.1016/j.foodchem.2018.11.074

## Description

### Domaine technique

L'invention relève du domaine des protéines de légumineuse, en particulier des isolats protéiques de légumineuse, encore plus particulièrement des isolats protéiques de pois. L'invention relève en particulier du domaine de l'amélioration organoleptique, en particulier de la flaveur, des protéines suscitées.

### Technique antérieure

Les besoins quotidiens humains en protéines sont compris entre 12 et 20% de la ration alimentaire. Ces protéines sont fournies aussi bien par des produits d'origine animale (viandes, poissons, œufs, produits laitiers) que par des aliments végétaux (céréales, légumineuses, algues).

Cependant, dans les pays industrialisés, les apports en protéines sont majoritairement sous la forme de protéines d'origine animale. Or, de nombreuses études démontrent qu'une consommation excessive de protéines d'origine animale au détriment des protéines végétales est une des causes d'augmentation de cancers et maladies cardio-vasculaires.

Par ailleurs, les protéines animales présentent beaucoup de désavantages, tant sur le plan de leur allergénicité, concernant notamment les protéines issues du lait ou des œufs, que sur le plan environnemental en relation avec les méfaits de l'élevage intensif.

Ainsi, il existe une demande croissante des industriels pour des composés d'origine végétale possédant des propriétés nutritionnelles et fonctionnelles intéressantes sans pour autant présenter les inconvénients de composés d'origine animale.

Le soja a été, et reste, la première alternative végétale aux protéines animales. L'utilisation du soja possède néanmoins des désavantages certains. La graine de soja est plus que fréquemment d'origine OGM et l'obtention de sa protéine passe par une étape de déshuilage utilisant du solvant.

Depuis les années 70, les légumineuses à graines, dont en particulier le pois, se sont fortement développées en Europe, majoritairement en France, comme ressource protéique alternative aux protéines animales à destination de l'alimentation animale et humaine. Le terme « pois » est ici considéré dans son acception la plus large et inclut en particulier toutes les variétés sauvages de « pois lisse » (« smooth pea »), et toutes les variétés mutantes de « pois lisse » et de « pois ridé » (« wrinkled pea »), et ce quelles que soient les utilisations auxquelles on destine généralement lesdites variétés (alimentation humaine, nutrition animale et/ou autres utilisations). Ces graines sont non-OGM et ne nécessitent pas de déhuilage solvanté.

Le pois contient environ 27 % en poids de matières protéiques. La protéine de pois, majoritairement de la globuline de pois, est extraite et valorisée industriellement depuis bon nombre d'années. On peut citer comme exemple de procédé d'extraction de la protéine de pois le brevet EP1400537. Dans ce procédé, la graine est broyée en absence d'eau (procédé dit de « broyage à sec ») afin d'obtenir une farine. Cette farine sera ensuite mise en suspension dans de l'eau afin d'en extraire la protéine.

Les protéines de légumineuses, et en particulier celles de pois, souffrent cependant d'une qualité organoleptique variable. En effet, celles-ci sont particulièrement connues pour délivrer une flaveur dite « pois », « beany » ou encore « végétale » lors de leur consommation ce qui peut représenter un inconvénient dans certains produits alimentaires.

Cette flaveur est causée par l'oxydation des lipides internes des graines de légumineuses par la lipoxygénase, provoquant l'apparition de molécules du type aldéhydes et cétones dont l'hexanal.

De plus, les protéines de légumineuses sont également fréquemment génératrices de la saveur amère ou de l'amertume. Cette saveur serait quant à elle apportée majoritairement par la présence de saponines.

Les utilisateurs de ces protéines de légumineuses connaissent ces problématiques de flaveur et ont développé des stratégies de formulations basées principalement sur l'utilisation d'arômes.

On peut citer par exemple la demande de brevet WO 2019/048564 de la société RHODIA qui enseigne que l'utilisation d'un arôme vanille permet de réduire la saveur amère dans un produit alimentaire fini de type boisson hyper-protéinée ou crème. Cependant, cette solution fonctionne partiellement car le fabricant est obligé d'ajouter un arôme en plus de la protéine dans la préparation de la recette, ce qui lui complexifie la tâche, et c'est la formulation en elle-même dans son ensemble qui agit comme masquant, non l'ajout de l'arôme spécifiquement.

En effet, les recettes présentées entre 20% et 50% de composés non-protéiques tels que du sucralose, de l'édulcorant intense ou du fructose. Cette formulation agit également en limitant la détection des flaveurs mais contribue également à un apport calorique important et à une obligation de mention sur l'étiquetage du produit fini.

Une autre solution a été décrite dans le document WO2019/048804 pour obtenir un produit alimentaire à base de protéines de légumineuses, par exemple une boisson prête à boire, aux propriétés organoleptiques améliorées. Cette solution repose sur un procédé de fabrication particulier du produit alimentaire utilisant un composé sélectionné : le citrate de sodium. Là encore, cette solution oblige le fabricant à utiliser ce composé particulier.

Une autre solution encore est celle fournie dans le document FR 2 942 585 A1, qui propose un procédé de préparation d'une poudre granulée comprenant une protéine végétale, notamment le pois, et une fibre végétale, notamment des maltodextrines.

Il est donc d'intérêt de proposer de nouvelles compositions protéiques de légumineuse, en particulier un isolat protéique de légumineuse, dont la flaveur est améliorée, notamment la réduction de sa note « pois », et dont l'utilisation est à la fois simple et immédiate, sans formulation trop lourde et/ou trop compliquée.

L'article de Lan et al. "Solid dispersion-based spray-drying improves solubility and mitigates beany flavour of pea protein isolate" (Food Chemistry, 2018) présente quelques travaux récents à ce sujet. L'équipe de Lan a mis au point un procédé dit d'« atomisation de dispersion solide » consistant en une dispersion aqueuse de protéine de pois et de gomme guar ou de maltodextrine séchée par atomisation. Avec une teneur minimale de 10% sec/sec en maltodextrine ou de gomme guar, l'isolat de protéine de pois obtenu possède une flaveur « pois » moins présente, du fait de sa teneur moins élevée en composés volatils. Le document FR 2942585 A1 décrit des compositions granulées de protéines de pois et de fibres végétales solubles, la fibre végétale pouvant également être une maltodextrine.

Néanmoins, la teneur en maltodextrine est ici également trop importante et il n'est pas souhaitable de disposer d'une quantité aussi importante d'un composé d'origine non-protéique en supplément de l'isolat de protéine de pois. Comme exemplifié dans la présente invention, un abaissement de cette teneur a pour conséquence une disparition de cet effet masquant. Par ailleurs, la maltodextrine présente un goût et une odeur assez neutres et elle ne répond pas à la définition d'arôme, ce qui est confirmé par le fait qu'elle ne figure pas dans les listes règlementaires des arômes.

D'autres stratégies consistent à traiter la matière première, comme par exemple dans le document Jiang et al., Faba bean flavour and technological property improvement by thermal pre-treatments, LWT - Food Science and Technology, 68 (2016), 295-305*.* Ce document enseigne, pour préserver les propriétés des protéines de la féverolle, d'utiliser un traitement micro-ondes particulier. Toutefois, ce type de traitement micro-ondes n'a à ce jour pas été développé à l'état industriel.

Dans le document WO03/082026 A1 est décrit un procédé de production d'un isolat de protéine comprenant en outre un polysaccharide présentant une flaveur neutre et un faible taux d'absorption d'eau, ces deux propriétés étant apportées à l'isolat en recouvrant la protéine par le polysaccharide.

Il existe donc un besoin de développer de nouvelles compositions protéique de légumineuse, en particulier un isolat protéique de légumineuse ne présentant pas les inconvénients des compositions antérieures, dont la flaveur est améliorée au travers de la réduction de la flaveur pois, et dont l'utilisation est à la fois simple et immédiate, sans formulation trop lourde et/ou trop compliquée tout en minimisant également les quantités de composé d'origine non-protéique mises en œuvre.

Des compositions de protéines de pois présentant une flaveur améliorée, utilisant des procédés particuliers de fabrication, ont été décrites dans la demande WO 2019/053387 A1.

Après de nombreuses recherches, la Demanderesse a identifié que cet objectif pouvait être atteint par la mise en œuvre d'un procédé particulier de co-atomisation d'une composition de protéine de légumineuse et d'au moins un arôme.

### Description générale de l'invention

Selon un premier aspect de l'invention, il est proposé un procédé de co-atomisation d'une composition protéique de légumineuse et d'au moins un arôme comprenant les étapes suivantes de :
1) dissolution et mélange d'une composition protéique de légumineuse et d'au moins un arôme dans un solvant aqueux ;
2) traitement thermique de la suspension aqueuse obtenue à l'étape précédente ;
3) séchage par co-atomisation de la suspension aqueuse traitée thermiquement.

Selon un second aspect non revendiqué, il est proposé une composition co-atomisée comprenant une composition protéique de légumineuse, préférentiellement un isolat protéique de légumineuse et au moins un arôme, ladite composition étant susceptible d'être obtenue selon le procédé de l'invention.

Selon un dernier aspect de l'invention, également non revendiqué, il est proposé l'utilisation de cette composition co-atomisée dans la préparation de compositions destinées à l'alimentation humaine ou animale.

### Description détaillée de l'invention

L'invention est exposée dans le jeu de revendications joint.

Selon un premier aspect, l'invention concerne donc un procédé de co-atomisation d'une composition protéique de légumineuse et d'au moins un arôme comprenant les étapes suivantes de :
1) dissolution et mélange d'une composition protéique de légumineuse et d'au moins un arôme dans un solvant aqueux ;
2) traitement thermique de la suspension aqueuse obtenue à l'étape précédente ;
3) séchage par co-atomisation de la suspension aqueuse traitée thermiquement.

D'une manière tout à fait surprenante, le procédé selon l'invention par le mélange d'une composition protéique de légumineuse avec au moins un arôme et la mise en œuvre ensuite d'une étape de traitement thermique puis d'une co-atomisation, permet de réduire la flaveur de ladite composition de légumineuse.

Cette réduction de la flaveur de légumineuse, notamment de pois dans le cas de la mise en œuvre d'une composition protéique de pois, est obtenue de manière synergique par la combinaison de trois caractéristiques à savoir le mélange de la composition protéique de légumineuse avec au moins un arôme, une étape de traitement thermique et une étape de co-atomisation. En effet, la combinaison de ces trois caractéristiques permet une diminution plus importante de la flaveur de légumineuse, notamment de pois, que la somme des réductions obtenues par ces caractéristiques prises de manière isolées.

Par « co-atomisée », on entend au sens de la présente invention que la composition protéique de légumineuse est atomisée conjointement avec le ou les arômes. En d'autres termes, que composition protéique de légumineuse et l'arôme sont présents dans la même solution avant atomisation.

Le terme « composition protéique » doit se comprendre dans la présente invention comme une composition obtenue par extraction et raffinage, ladite composition comportant des protéines, macromolécules formées d'une ou de plusieurs chaînes polypeptidiques constituées de l'enchaînement de résidus d'acides aminés liés entre eux par des liaisons peptidiques. Dans le cadre particulier des protéines de pois, la présente invention concerne plus particulièrement les globulines (environ 50-60% des protéines du pois). Les globulines de pois se subdivisent principalement en trois sous-familles : les légumines, les vicilines et les convicilines.

Par « légumineuse », on entend au sens de la présente invention la famille de plantes dicotylédones de l'ordre des *Fabales.* C'est l'une des plus importantes familles de plantes à fleurs, la troisième après les *Orchidaceae* et les *Asteraceae* par le nombre d'espèces. Elle compte environ 765 genres regroupant plus de 19 500 espèces. Plusieurs légumineuses sont d'importantes plantes cultivées parmi lesquelles le soja, les haricots, les pois, le pois chiche, la féverole, l'arachide, la lentille cultivée, la luzerne cultivée, différents trèfles, les fèves, le caroubier, la réglisse.

Par « arôme », on entend au sens de la présente invention tout composé chimique permettant une modification de la perception du goût et de l'odeur, qui ensemble forment ce que l'on appelle « flaveur ». La législation européenne, comme définie par le règlement 1334/20082, entend par arômes des "produits non destinés à être consommés en l'état, qui sont ajoutés aux denrées alimentaires pour leur conférer une odeur et/ou un goût ou modifier ceux-ci" (article 3.a du Règlement CE 1334/2008). L'arôme utile à l'invention présente la capacité à réduire la note « pois » de la composition protéique de légumineuse.

Les arômes sont issus ou constitués des composants suivants : substances aromatisantes, préparations aromatisantes, arômes de fumée, arômes obtenus par traitement thermique, précurseurs d'arômes et autres arômes.

Dans le cadre de la présente invention, on entend préférentiellement par arôme, une substance aromatisante. Une substance aromatisante est une "substance chimique définie possédant des propriétés aromatisantes" (définition article 3.b du Règlement CE 1334/2008).

Une substance aromatisante naturelle est "obtenue par des procédés physiques, enzymatiques ou microbiologiques appropriés, à partir de matières d'origine végétale, animale ou microbiologique prises en l'état ou après leur transformation pour la consommation humaine par un ou plusieurs des procédés traditionnels de préparation des denrées alimentaires dont la liste figure à l'annexe II" (article 3.c du Règlement CE 1334/2008).

Les substances aromatisantes naturelles correspondent aux substances qui sont naturellement présentes et identifiées dans la nature. Les substances aromatisantes peuvent également être issues d'autres sources naturelles que la source naturelle « première », il s'agit alors de synthétiser la molécule et de la reproduire. D'autres molécules, non identifiées dans la nature, peuvent également être plus puissantes en goût que les molécules naturelles.

Le procédé selon l'invention met en œuvre au moins un arôme, c'est-à-dire un arôme ou un mélange d'arômes.

Le procédé selon l'invention comprend donc une étape 1) de dissolution et mélange d'une composition protéique de légumineuse et d'au moins un arôme dans un solvant aqueux.

Le mélange entre la composition protéique de légumineuse et au moins un arôme peut être réalisé de manière séparée dans deux solvants aqueux qui seront ensuite mélangés ou bien de manière commune avant d'être dispersé dans un solvant aqueux.

Selon un mode de réalisation particulier, le solvant aqueux est de préférence l'eau.

La température de dissolution est préférentiellement comprise de 10°C et 40°C, préférentiellement de 20°C et 30°C. Le pH de dissolution est préférentiellement compris de 4 et 9, encore plus préférentiellement de 6 et 8, et encore plus préférentiellement de 7.

Le temps de dissolution est choisi afin d'obtenir une solution homogène. Celui-ci est préférentiellement choisi entre 1 et 60 minutes, préférentiellement entre 2 et 30 minutes, et encore plus préférentiellement entre 3 et 10 minutes.

L'au moins un arôme peut être mélangé et dissout dans la composition protéique de légumineuse selon une quantité inférieure à 5% en poids par rapport au poids sec total de la composition protéique de légumineuse (sec/sec), voire à 1% en poids (sec/sec), notamment de 0,01 à 1% en poids (sec/sec). Avantageusement, l'au moins un arôme peut être mélangé et dissout dans la composition protéique de légumineuse selon une quantité de 0,01 à 0,5% en poids (sec/sec), préférentiellement de 0,05 à 0,2% en poids (sec/sec), et encore plus préférentiellement, selon une quantité de 0,1% en poids (sec/sec).

La mise en œuvre de ces faibles quantités d'arôme est particulièrement intéressante car il est avantageux de pouvoir maintenir des quantités inférieures à 5% en poids par rapport au poids sec total de la composition protéique de légumineuse (sec/sec), voire à 1% en poids (sec/sec), notamment de 0,01 à 1% en poids (sec/sec), par exemple de 0,01 à 0,5% en poids (sec/sec) préférentiellement de 0,05 à 0,2% en poids (sec/sec), et encore plus préférentiellement, selon une quantité de 0,1% en poids (sec/sec) dans le mélange afin de limiter, en fin de procédé, la proportion des composés d'origine non-protéique présents en supplément dans la poudre.

L'arôme est choisi dans la liste des différents arômes disponibles dans l'industrie alimentaire. Celui-ci est préférentiellement choisi dans la liste des arômes de vanille, fraise ou caramel. De manière préférentielle, l'arôme vanille est préféré.

Les aromes peuvent comprendre des composés aliphatiques, alicycliques, aromatiques, hétérocycles et ou terpènes. Parmi les composés aliphatiques, ils peuvent être choisis parmi les hydrocarbures, les éthers, les aldéhydes, les cétones, les alcools, les esters, les acides, les amines, les sulfures, les thiols et les thioesters. Les arômes peuvent également comprendre des dérivés cycliques (cyclotènes) et des aromatiques (phénols). Les hétérocycles peuvent être des pyrazines, lactones, oxazoles, thiazoles, pyrroles, pyridines, pyrannes, pyrimidines et leurs dérivés condensés. Les terpènes peuvent être des mono- et sesquiterpènes. De préférence, les aromes sont choisis parmi les composés aromatiques et hétérocycles.

L'arôme peut également être préférentiellement choisi dans la liste des différents masqueurs d'arôme disponibles dans l'industrie alimentaire, tel que par exemple le masqueur Springer^{®} Mask 101 commercialisé par la société Lesaffre. Un composé masqueur d'arômes est connu pour être un arôme sélectionné en fonction de sa capacité spécifique à bloquer, masquer ou modifier les notes indésirables. C'est ainsi que les arômes cités ci-dessus peuvent également avoir ces fonctions.

Les masqueurs d'arômes peuvent être choisis parmi les acides gras, les composés comprenant des fonctions carbonyles, les composés comprenant des sulfures, des composés arômes bruns (« sweet brown flavors »), les composés esters, les composés lactones ou les dérivés de jus, de préférence des composés arômes bruns (« sweet brown flavors »). Les acides gras peuvent être sélectionnés parmi les acides suivants : acide nonanoïque, acide décanoïque, acide dodécanoïque, acide tétradécanoïque, acide hexadécanoïque, acide oléique, acide octanoïque, 9-décénoïque et hexanoïque. Les composés comprenant des fonctions carbonyles peuvent être sélectionnés parmi les composés suivants : acétoïne, acétylpropionyle, 2-heptanone, 2-nonanone, 2-undécanone et cis-4-hepténal. Les composés comprenant des sulfures peuvent être sélectionnés parmi les composés suivants : sulfure de diméthyle et trisulfure de diméthyle. Les composés arômes bruns (« sweet brown flavors ») peuvent être sélectionnés parmi les composés suivants : maltol, vanilline, cyclopenténolone, furanéol, extraits de vanille, dérivés de vanille, extraits de caramel et dérivés de lait condensé. Les composés esters peuvent être sélectionnés parmi les composés suivants : caprate d'éthyle, dodécanoate d'éthyle, myristate d'éthyle, palmitate d'éthyle et oléate d'éthyle. Les composés lactone peuvent être sélectionnés parmi les composés suivants : gamma décalactone, delta décalalone, delta dodécalactone, gamma undécalactone et massoia lactone. Les dérivés de jus peuvent être sélectionnés parmi dérivés de jus de fruits suivants : fraise, concombre, pomme, cerise, kiwi et abricot. De préférence, le masqueur d'arôme comprend des composés arômes bruns (« sweet brown flavors »), particulièrement efficaces pour masquer l'arôme des protéines de pois.

Préférentiellement, l'arôme utile à l'invention ne se retrouve dans la composition protéique de légumineuse de départ.

Selon un mode de réalisation particulier, la composition protéique de légumineuse est un isolat protéique. Tout isolat protéique de légumineuses du commerce est une base suffisante pour la réalisation du procédé de l'invention. L'obtention d'un isolat protéique de légumineuses peut également être réalisée grâce aux procédés de l'art antérieur connus tels que ceux décrits dans les documents EP 1 909 593 ou WO 2015/071499.

Selon un mode de réalisation préféré, la composition protéique de légumineuse est un isolat protéique de légumineuse choisie parmi le pois, le lupin et la féverole. De préférence, la composition protéique de légumineuse est un isolat protéique de pois.

Le terme « pois » est ici considéré dans son acception la plus large et inclut en particulier toutes les variétés sauvages de « pois lisse » (« smooth pea »), et toutes les variétés mutantes de « pois lisse » et de « pois ridé » (« wrinkled pea »), et ce quelles que soient les utilisations auxquelles on destine généralement lesdites variétés (alimentation humaine, nutrition animale et/ou autres utilisations).

Le terme « pois » dans la présente demande inclut les variétés de pois appartenant au genre *Pisum* et plus particulièrement aux espèces *sativum* et *aestivum.*

De manière préférentielle, la composition protéique de légumineuse selon l'invention présente une richesse en protéines totales supérieure à 80% en poids, préférentiellement supérieure à 85% en poids, et encore plus préférentiellement, supérieure à 90% en poids sur matière sèche totale de ladite composition.

La richesse en protéine totale est mesurée par toute technique bien connue de l'homme du métier. De préférence, on réalise un dosage de l'azote total (en %/brut) et on multiplie le résultat par le coefficient 6,25, il s'agit de la méthode de Kjeldhal. Cette méthodologie bien connue dans le domaine des protéines végétales se base sur le constat que les protéines contiennent en moyenne 16% d'azote.

De manière préférentielle, la composition protéique de légumineuse selon l'invention présente une teneur en matière sèche supérieure à 80% en poids, préférentiellement supérieure à 85% en poids, encore plus préférentiellement supérieure à 90% en poids par rapport au poids total de la composition.

Toute méthode pour mesurer la teneur en eau est utilisable pour quantifier cette matière sèche, la technique gravimétrique évaluant la perte d'eau par dessiccation étant préférée.

Cette technique gravimétrique consiste à déterminer la quantité d'eau évaporée par chauffage d'une quantité connue d'un échantillon de masse connue. Le protocole est le suivant :
- on pèse l'échantillon au départ et on mesure une masse m1 en g,
- on évapore l'eau en plaçant l'échantillon dans une enceinte chauffée jusqu'à stabilisation de la masse de l'échantillon, l'eau étant complétement évaporée. De préférence, la température est de 105°C sous pression atmosphérique, soit environ 1013 hPa,
- on pèse l'échantillon final et on mesure une masse m2 en g.
La matière sèche est alors déterminée par la formule suivante : (m2/m1) x 100.

Le procédé selon l'invention comprend également une étape 2) de traitement thermique de la suspension aqueuse obtenue à étape 1).

L'étape de traitement thermique peut avantageusement être effectuée à une température comprise de 100°C à 160°C et pendant 0,01 à 10 secondes, préférentiellement entre 5 et 8 secondes, suivi d'un refroidissement immédiat.

Tout appareillage bien connu de l'homme du métier permettant d'obtenir ces températures est utilisable. Cependant, on préfère l'utilisation de tuyères d'injection vapeur ou bien d'échangeurs à plaques.

Le procédé selon l'invention comprend une étape 3) dans laquelle la suspension aqueuse traitée thermiquement est séchée par atomisation.

Selon un mode de réalisation particulier, l'atomisation de la suspension aqueuse traitée thermiquement est réalisée de manière à obtenir une matière sèche supérieure à 80%, préférentiellement supérieure à 90%.

Par atomisation, on entend dans la présente invention toute méthode de déshydratation d'un liquide sous forme de poudre par passage dans un flux d'air chaud. Le liquide est préférentiellement dispersé dans l'air chaud par dispersion en fines gouttelettes à l'aide d'un système de buses.

Selon l'étape 3) du procédé de l'invention, l'atomisation est préférentiellement réalisée dans un système atomiseur dit « multi-effets » ou « multi-étages » permettant le recyclage du produit séché en entrée, afin de granuler et d'augmenter ainsi la granulométrie.

La température d'entrée d'air de l'atomiseur est préférentiellement comprise de 180°C à 240°C, préférentiellement de 190°C à 220°C, et encore plus préférentiellement, de 200°C à 210°C.

La température de sortie de l'atomiseur est préférentiellement comprise de 60°C à 110°C, préférentiellement de 70°C à 100°C, et encore plus préférentiellement, de 80°C à 90°C.

Après cette étape 3) une poudre est obtenue et elle correspond à la composition protéique co-atomisée avec l'arôme.

Selon un mode de réalisation particulier, qui n'est pas revendiqué, la composition obtenue par le procédé de l'invention est constituée d'une composition protéique de légumineuse et d'au moins un arôme. En d'autres termes, selon ce mode de réalisation, le procédé de l'invention ne met en œuvre, outre le solvant aqueux, qu'une composition protéique de légumineuse et au moins un arôme.

Selon une variante de ce mode de réalisation particulier, le procédé selon l'invention est constitué des étapes suivantes de :
1) dissolution et mélange d'une composition protéique de légumineuse et d'au moins un arôme dans un solvant aqueux ;
2) traitement thermique de la suspension aqueuse obtenue à l'étape précédente ;
3) séchage par co-atomisation de la suspension aqueuse traitée thermiquement.

Selon ce mode de réalisation particulier, la poudre récupérée après l'étape 3) est constituée de la composition protéique de légumineuse et l'arôme. Par conséquent, elle est exempte de tout autre composé tel qu'une maltodextrine et/ou la gomme guar.

Comme mentionné précédemment, le procédé selon l'invention est particulièrement avantageux car il permet d'améliorer les propriétés organoleptiques d'une composition protéique de légumineuse en réduisant la flaveur de légumineuse, notamment la flaveur pois.

Cette réduction de la flaveur de légumineuse, notamment de pois, est obtenue de manière synergique par la combinaison de trois caractéristiques à savoir le mélange d'au moins un arôme dans la composition protéique de légumineuse suivi d'une étape de traitement thermique et d'une l'étape de co-atomisation. En effet, la combinaison de ces trois caractéristiques permet une diminution plus importante de la flaveur de légumineuse, notamment de pois, que la somme des réductions obtenues par ces caractéristiques prises de manière isolées.

La demanderesse a ainsi développé un procédé innovant permettant de fournir des compositions protéiques de légumineuse ayant une flaveur légumineuse réduite, notamment des isolats de pois présentant une flaveur pois réduite, pouvant être facilement et directement utilisée dans des préparations alimentaires. Avantageusement, cela permet ainsi de substituer une partie des protéines d'origines animales tout en diminuant les inconvénients généralement rencontrés avec les protéines d'origines végétales issues de légumineuses.

Selon un autre aspect qui n'est pas revendiqué, il est proposé une composition co-atomisée comprenant une composition protéique de légumineuse et au moins un arôme.

La composition protéique de légumineuse et l'arôme sont tels que définis précédemment.

La composition co-atomisée comprenant une composition protéique de légumineuse et au moins un arôme est susceptible d'être obtenue selon le procédé décrit précédemment.

La composition selon la présente divulgation est avantageuse car elle présente une flaveur pois réduite et permet ainsi d'améliorer les propriétés organoleptiques des produits alimentaires au sein desquels elle est incorporée, lesdits produits sont ainsi plus neutres en bouche pour les consommateurs.

D'une manière avantageuse, la composition co-atomisée selon la présente divulgation permet notamment de substituer au sein des compositions alimentaires une partie des protéines d'origines animales par des protéines d'origines végétales tout en diminuant les inconvénients de l'utilisation de ce type de protéines.

Selon un dernier aspect non revendiqué, il est proposé l'utilisation de la composition co-atomisée comprenant une composition protéique de légumineuse et au moins un arôme telle que précédemment définie dans la préparation de compositions alimentaires humaines ou animales.

L'utilisation dans les compositions destinées à l'alimentation humaine est avantageuse car elle permet de diminuer la flaveur pois au sein desquelles elle est ajoutée et d'améliorer ainsi la sensation organoleptique perçue par le consommateur.

L'invention sera mieux comprise à l'aide des exemples non-limitatifs ci-dessous.

### Exemples

### Exemple 1 : Mise en œuvre selon l'invention du procédé de co-atomisation d'une composition protéique de légumineuse et d'un arôme.

Pour cet exemple, les produits suivants sont utilisés :
- Composition protéique de légumineuse : isolat protéique de pois Nutralys^{®} S85F, fabriqué et commercialisé par la société Roquette Frères.
- Arôme : masqueur d'arôme à base de vanilline.

On réalise deux mélanges titrant 10% de matière sèche avec de l'eau distillée à 20°C dans les proportions décrites ci-dessous :
- mélange A (contrôle) : 100 % Nutralys^{®} S85F.
- mélange B : 99,9 % Nutralys^{®} et 0,1 % d'arôme.

Les deux mélanges sont placés sous agitation pendant 30 minutes à pH 7.

Les mélanges A et B subissent ensuite une étape de traitement thermique à 140°C pendant 10 secondes. Une partie du mélange B ne subit pas cette étape de traitement thermique et constitue le mélange B'.

Les mélanges A, B et B' sont ensuite atomisés sur un atomiseur simple effet NUBILOSA Spray Dryer Type LTC-Q, avec 195°C en température d'entrée d'air et 90°C en température de sortie d'air. Les poudres A, B et B' ainsi obtenues sont récupérées pour une étude organoleptique.

L'étude organoleptique des différentes poudres obtenues est effectuée à l'aide d'un panel et suivant le protocole ci-après.

Le panel est composé de 30 personnes entrainées depuis 2 à 4 ans. Leurs performances sont fréquemment vérifiées en termes de sensibilité, de consensus et de répétabilité.

Les matrices de dégustation sont constituées par des suspensions de chacune des poudres à 4% en poids dans de l'eau d'Evian^{®}, homogénéisées à l'aide d'un mélangeur immersif, et sont reprises ci-après :
- Matrice 1 : Nutralys^{®} (hors invention)
- Matrice 2 : Nutralys^{®} + 0,1 % en poids d'arôme (hors invention)
- Matrice 3 : poudre A (hors invention)
- Matrice 4 : poudre B' (hors invention)
- Matrice 5 : poudre B (selon l'invention)

Les conditions de dégustations sont les suivantes: box individuel, murs blancs, atmosphère calme, lumière rouge, fin de matinée, produits codés avec 3 chiffres, présentés dans un ordre aléatoire, et utilisation de pomme et/ou d'eau pour laver la cavité buccale.

La méthodologie utilisée est appelée "BLOCK PROFILING". Cette méthode est dite une analyse descriptive quantitative (Quantitative Descriptive Analysis ou QDA en anglais): les panelistes notent chaque produit (matrice) sur une échelle d'intensité (de 0 à 10) au travers de différents indicateurs qui correspondent par exemple à des saveurs, des flaveurs, ou des notes particulières.

Le contrôle, identifié par "C", est toujours présenté en premier et il est présenté de manière aveugle 1 session sur 2.

Les panelistes mènent l'exercice de dégustation par bloc: ils évaluent chaque produit singulièrement (en commençant par "C") dans un premier bloc (indicateurs : salé, amer, astringent, sableux - avec une pince de nez), ensuite ils analysent tous les produits dans un second bloc (indicateurs : pois, bouillon, noix, amande). Enfin, ils refont l'exercice dans un troisième bloc (indicateurs : pomme de terre, céréale). Les produits sont évalués lors de multiples sessions, pour atteindre 10 évaluations. On réalise ensuite pour chaque indicateur la moyenne arithmétique de ces 10 évaluations.

Les résultats sont présentés dans le tableau 1 ci-dessous pour la flaveur pois et la saveur salée:

**[Tableau 1]**

| | **Indicateurs** | |
|---|---|---|
| | Pois | Salé |
| Matrice 1 contrôle : Nutralys^{®} S85F | 4,45 | 3,37 |
| Matrice 2 : Nutralys^{®} S85F + arôme | 4,06 | 3,79 |
| Matrice 3 : poudre A | 4,07 | 4,33 |
| Matrice 4 : poudre B' | 4,77 | 3,79 |
| Matrice 5 : poudre B | 3,73 | 3,14 |

Le Nutralys^{®} S85F de la matrice 1 et le mélange de Nutralys^{®} S85F et d'arôme de la matrice 2 n'ont pas été chauffés et atomisés et servent respectivement de contrôle et de comparatif.

Pour la flaveur pois, les résultats du tableau 2 montrent que le simple ajout de l'arôme au à l'isolat protéique de pois (matrice 2) diminue légèrement la flaveur pois par rapport au contrôle. Au travers de la matrice 3, on observe également que l'atomisation de l'isolat protéique de pois uniquement entraine une diminution de la flaveur pois par rapport au contrôle, et que ladite diminution est équivalente à celle observée avec la matrice 2.

A l'inverse, les résultats avec la matrice 4 démontrent que la mise en œuvre de la co-atomisation de l'isolat protéique de pois et de l'arôme n'entraine pas de diminution de la flaveur pois. Au contraire, cette dernière est même plus importante par rapport au contrôle. La mise en œuvre uniquement de la co-atomisation sur un mélange isolat protéique de pois + arôme entraine donc une augmentation non désirable de la flaveur pois.

Par contre, la mise en œuvre d'une étape de traitement thermique préalablement à la co-atomisation de l'isolat protéique de pois et de l'arôme (matrice 5) entraine une diminution d'environ 16 % de la flaveur pois par rapport au contrôle et d'environ 22% par rapport à la mise en œuvre uniquement de la co-atomisation du mélange de l'isolat protéique de pois et de l'arôme (matrice 4). De manière tout à fait surprenante, cette diminution est même plus importante que celle observée avec l'ajout de l'arôme sans co-atomisation (matrice 2) ou à l'atomisation de l'isolat protéique de pois seul (matrice 3).

Ces résultats démontrent bien la synergie de l'ajout d'un arôme et de la mise en œuvre d'une étape de traitement thermique et de co-atomisation selon l'invention sur la diminution de la flaveur pois d'un isolat de pois.

Concernant la saveur salée, les résultats montrent que l'ajout de l'arôme au à l'isolat protéique de pois (matrice 2) augmente cette saveur. Au travers de la matrice 3, on observe également que l'atomisation de l'isolat protéique de pois uniquement entraine une diminution de cette saveur salée par rapport au contrôle.

De la même manière, les résultats avec la matrice 4 montrent que la mise en œuvre de la co-atomisation de l'isolat protéique de pois et de l'arôme entraine une augmentation de la saveur salée.

Par contre, et de manière tout à fait surprenante, la mise en œuvre d'une étape de traitement thermique préalablement à la co-atomisation de l'isolat protéique de pois et de l'arôme (matrice 5) entraine une diminution d'environ 7 % de la saveur sucrée par rapport au contrôle et d'environ 17 % par rapport à la mise en œuvre uniquement de la co-atomisation l'isolat protéique de pois et de l'arôme (matrice 4).

Ces résultats démontrent bien la synergie de l'ajout d'un arôme et de la mise en œuvre d'une étape de traitement thermique et de co-atomisation selon l'invention sur la diminution de la saveur salée d'un isolat de pois.

En conclusion, le procédé de co-atomisation selon l'invention permet une amélioration organoleptique des isolats de protéines, et notamment des isolats de protéines de pois, au travers d'une réduction de la flaveur pois et de la saveur salée.

### Exemple 2 comparatif : Mise en œuvre d'un procédé de co-atomisation d'une composition protéique de légumineuse et d'une maltodextrine. (Exemple hors-invention)

Cet exemple a pour objectif de mettre en évidence l'effet de la co-atomisation d'une maltodextrine avec un isolat de protéine de pois avec comme décrit dans l'article Lan et al. « Solid dispersion-based spray-drying improves solubility and mitigates beany flavour of pea protein isolate" (Food Chemistry, 2018). De plus, à la différence de Lan *et al* les poudres obtenues sont testées organoleptiquement.

Pour cet exemple, les produits suivants sont utilisés :
- Isolat protéique de pois : produit Nutralys^{®} S85F, fabriqué et commercialisé par la société Roquette Frères.
- Maltodextrine de pois : produit KLEPTOSE^{®} LINECAPS, d'un D.E (dextrose équivalent) de 17, également fabriqué et commercialisé par la société Roquette Frères.

On réalise deux mélanges titrant 10% de matière sèche avec de l'eau distillée à 20°C dans les proportions décrites dans ci-dessous :
- Mélange 1 : 100 % de Nutralys^{®} S85F,
- Mélange 2 : 95% de Nutralys^{®} S85F et 5% de maltodextrine de pois.

Les deux mélanges sont agités au moins 30 minutes à pH 7.

Les mélanges subissent ensuite un traitement thermique à 140°C pendant 10 secondes avant d'être atomisés sur un atomiseur NUBILOSA Spray Dryer Type LTC-Q, ayant 195°C en température d'entrée d'air et 90°C en température de sortie d'air.

Les poudres 1 et 2 obtenues respectivement à partir des mélanges 1 et 2 sont récupérées pour une étude organoleptique.

L'étude organoleptique est effectuée selon le même protocole que l'exemple 1.

Les matrices de dégustation sont donc également constituées par des suspensions de chacune des poudres à 4% en poids dans de l'eau d'Evian^{®}, homogénéisée à l'aide d'un mélangeur immersif.

Les résultats de l'étude organoleptique par le panel sont présentés dans le tableau 2 ci-dessous :

**[Tableau 2]**

| | **Indicateurs** | |
|---|---|---|
| | Pois | Amer |
| Matrice contrôle: Nutralys^{®} S85F | 4,3 | 3,5 |
| Matrice 1: poudre 1 | 4,0 | 3,4 |
| Matrice 2: poudre 2 | 5,0 | 4,5 |

Dans l'article de Lan *et al.* la maltodextrine est présente à une teneur de 10% en poids (sec/sec) dans le mélange.

Les résultats présentés dans le tableau 2 avec la matrice 2 démontrent qu'avec une quantité inférieure en maltodextrine, soit 5% en poids (sec/sec), la co-atomisation, même avec une étape préalable de traitement thermique, ne permet pas de diminuer la flaveur pois par rapport au contrôle. Au contraire, cette dernière est même augmentée d'environ 16%.

La même conclusion est faite avec la saveur amère.

Par conséquent, les résultats montrent qu'à une teneur inférieure à celle décrite par Lan *et al.,* l'effet sur la réduction de la flaveur pois par co-atomisation d'un isolat protéique de pois avec une maltodextrine n'est pas observé.

Ces résultats renforcent le fait que le procédé selon l'invention est particulièrement avantageux pour améliorer les propriétés organoleptiques, notamment au travers de la diminution de la flaveur d'un isolat protéique de pois, et notamment la flaveur pois.

D'autres essais utilisant, en lieu et place de l'arôme précédent, d'autres arômes ont également été réalisés. Le procédé a été réalisé avec notamment un arôme à base de maltol et les propriétés sont autant améliorées. Il a également été testé avec l'arôme Cleartaste (MycoTechnology Inc) et avec Vanifolia (Solvay) et, à chaque essai, ces propriétés sont améliorées également.

## Revendications

1. Procédé de co-atomisation d'une composition protéique de légumineuse et d'au moins un arôme comprenant les étapes suivantes de :
1) dissolution et mélange d'une composition protéique de légumineuse et d'au moins un arôme dans un solvant aqueux ;
2) traitement thermique de la suspension aqueuse obtenue à l'étape précédente ;
3) séchage par co-atomisation de la suspension aqueuse traitée thermiquement.

2. Procédé de co-atomisation selon la revendication 1, **caractérisé en ce que** l'arôme est dissout et mélangé à la composition protéique de légumineuse selon une quantité de 0,01% et 0,5% en poids sec par rapport au poids sec total de la composition protéique de légumineuse (sec/sec, préférentiellement entre 0,05 et 0,2% en poids (sec/sec), et encore plus préférentiellement, selon une quantité de 0,1% en poids (sec/sec).

3. Procédé de co-atomisation selon la revendication 1 ou 2, **caractérisé en ce que** l'étape de traitement thermique est réalisée selon une température comprise de 100°C à 160°C et pendant 0,01 à 10 secondes suivi d'un refroidissement immédiat.

4. Procédé de co-atomisation selon l'une des revendications 1 à 3, **caractérisé en ce que** la composition protéique de légumineuse est un isolat protéique de légumineuse, de préférence, un isolat protéique de pois.

## Patentansprüche

1. Verfahren zur Co-Sprühtrocknung einer Leguminosenproteinzusammensetzung und mindestens eines Aromas, umfassend die folgenden Schritte:
1) Auflösen und Mischen einer Leguminosenproteinzusammensetzung und mindestens eines Aromas in einem wässrigen Lösungsmittel;
2) Wärmebehandeln der im vorhergehenden Schritt erhaltenen wässrigen Suspension; und
3) Trocknen der wärmebehandelten wässrigen Suspension durch Co-Sprühtrocknung.

2. Verfahren nach Anspruch 1, **dadurch gekennzeichnet, dass** das Aroma in einer Menge von 0,01 bis 0,5 Gew.-%, bezogen auf das Gesamttrockengewicht der Leguminosenproteinzusammensetzung (trocken/trocken), gelöst und mit der Leguminosenproteinzusammensetzung gemischt wird, wobei die Menge vorzugsweise 0,05 bis 0,2 Gew.-% (trocken/trocken) und noch bevorzugter 0,1 Gew.- % (trocken/trocken) beträgt.

3. Verfahren nach Anspruch 1 oder 2, **dadurch gekennzeichnet, dass** der Wärmebehandlungsschritt bei einer Temperatur von 100 °C bis 160 °C für 0,01 bis 10 Sekunden durchgeführt wird, wobei sich eine sofortige Abkühlung anschließt.

4. Verfahren nach einem der Ansprüche 1 bis 3, **dadurch gekennzeichnet, dass** die Leguminosenproteinzusammensetzung ein Leguminosenproteinisolat, vorzugsweise ein Erbsenproteinisolat, ist.

## Claims

1. A process for co-atomising a legume protein composition and at least one flavouring, comprising the following steps:
1) dissolving and mixing a legume protein composition and at least one flavouring in an aqueous solvent;
2) heat-treating the aqueous suspension obtained in the preceding step; and
3) drying the heat-treated aqueous suspension by co-atomisation.

2. The process according to claim 1, **characterised in that** the flavouring is dissolved and mixed with the legume protein composition in an amount of 0.01 to 0.5% by dry weight, based on the total dry weight of the legume protein composition (dry/dry), preferably in an amount of 0.05 to 0.2% by weight (dry/dry), and even more preferably in an amount of 0.1% by weight (dry/dry).

3. The process according to claim 1 or 2, **characterised in that** the heat-treatment step is carried out at a temperature of 100°C to 160°C for 0.01 to 10 seconds, followed by immediate cooling.

4. The process according to any one of claims 1 to 3, **characterised in that** the legume protein composition is a legume protein isolate, preferably a pea protein isolate.
